# EUROPÄISCHE PATENTSCHRIFT

(11) **EP 0 739 433 B1**
(45) Veröffentlichungstag und Bekanntmachung des Hinweises auf die Patenterteilung: **12.08.1998**
(21) Anmeldenummer: 94920456.4
(22) Anmeldetag: 16.06.1994
(51) Int. Cl.: D21C 3/00, C12S 3/00

(54) **VERFAHREN ZUR VERÄNDERUNG, ABBAU ODER BLEICHEN VON LIGNIN, LIGNINHALTIGEN MATERIALIEN ODER KOHLE**
PROCESS FOR MODIFYING, BREAKING DOWN OR BLEACHING LIGNIN, MATERIALS CONTAINING LIGNIN OR COAL
PROCEDE DE MODIFICATION, DE DEGRADATION OU DE BLANCHIMENT DE LA LIGNINE, DE MATERIAUX CONTENANT DE LA LIGNINE OU DE CHARBON

(30) Priorität: 16.06.1993 DE 4319696
(43) Veröffentlichungstag der Anmeldung: 30.10.1996
(73) Patentinhaber: Lignozym GmbH, D-52499 Baesweiler (DE)
(72) Erfinder: Call, Hans-Peter, D-52531 Uebach-Palenverg (DE)
(74) Vertreter: Potten, Holger
(86) Internationale Anmeldenummer: EP9401966
(87) Internationale Veröffentlichungsnummer: WO9429510

(56) Entgegenhaltungen:
- EP-A- 0 429 422
- WO-A-92/20857
- DATABASE WPI Section Ch, Week 8951, Derwent Publications Ltd., London, GB; Class D16, AN 89-376261 & SE,A,8 800 673 (STONE FILTER CO INC) 27. August 1989
- J.P. CASEY 'Pulp and Paper; Chemistry and Chemical Technology', 1980, JOHN WILEY & SONS, NEW YORK

## Beschreibung

Die vorliegende Erfindung betrifft ein neuartiges Verfahren zur Veränderung von ligninhaltigen Materialien oder Kohle mittels Oxidoreduktasen und hocheffektiven Mediatoren.

Wirtschaftlich am bedeutensten ist die Entfernung von Lignin bei der Herstellung von Zellstoff.

Als heute hauptsächlich zur Zellstoffherstellung verwendete Verfahren sind das Sulfat- und das Sulfitverfahren zu nennen. Mit beiden Verfahren wird unter Kochen und unter Druck Zellstoff erzeugt. Das Sulfat-Verfahren arbeitet unter Zusatz von NaOH und NA₂S_{,} während im Sulfit-Verfahren Ca(HSO₃)₂ + SO₂ zur Anwendung kommt.

J.P. Casey "Pulp and Paper; Chemistry and Chemistry and Chemical Technology" dritte Auflage, Band I, 1980, John Wiley & Sons, New York, Seiten 482-486 (Auszug aud dem Kapitel "Alkaline Pulping") offenbart ein Verfahren zur Herstellung von Zellstoff durch Entfernung (Veränderung, Abbau) von Lignin aus z.B. Holz. Unter den vielen alkalischen Verfahren wird auch das sogennante Sauerstoff-Verfahren genannt.

Daneben existieren einige umweltfreundliche Kochverfahren mit Hilfe von organischen Lösungsmitteln.

Alle Verfahren haben als Hauptziel die Entfernung des Lignins aus dem verwendeten Pflanzenmaterial, Holz oder Einjahresplanzen.

Das Lignin, das mit der Cellulose und der Hemicellulose den Hauptbestandteil des Pflanzenmaterials (Stengel oder Stamm) ausmacht, muß entfernt werden, da es sonst nicht möglich ist, nicht vergilbende und mechanisch hochbelastbare Papiere herzustellen.

Die Holzstofferzeugungsverfahren arbeiten mit Steinschleifern (Holzschliff) oder mit Refinern (TMP). die das Holz nach entsprechender Vorbehandlung (chemisch. thermisch oder chemischthermisch) durch Mahlen defibrillieren.

Diese Holzstoffe besitzen noch einen Großteil des Lignins. Sie werden u.a. für die Herstellung von Zeitungen. Illustrierten, etc. verwendet.

Seit einigen Jahren werden die Möglichkeiten des Einsatzes von Enzymen für den Ligninabbau erforscht. Der Wirkmechanismus derartiger lignolytischer Systeme ist erst vor einigen Jahren aufgeklärt worden, als es gelang, durch geeignete Anzuchtbedingungen und Induktorzusätze bei dem Weißfäulepilz Phanerochaete chrysosoporium zu ausreichenden Enzymmengen zu kommen. Hierbei wurden die bis dahin unbekannten Ligninperoxidasen und Manganperoxidasen entdeckt. Da Phanerochaete chrysosoporium ein sehr effektiver Ligninabbauer ist, versuchte man dessen Enzyme zu isolieren und in gereinigter Form für den Ligninabbau zu verwenden. Dies gelang jedoch nicht, da sich herausstellte, daß die Enzyme vor allem zu einer Repolymerisation des Lignins und nicht zu dessen Abbau führen.

Ähnliches gilt auch für andere lignolytische Enzymspezies wie Laccasen, die das Lignin mit Hilfe von Sauerstoff anstelle von Wasserstoffperoxid oxidativ abbauen. Es konnte festgestellt werden, daß es in allen Fällen zu ähnlichen Prozessen kommt. Es werden nämlich Radikale gebildet, die wieder selbst miteinander reagieren und somit zur Polymerisation führen.

So gibt es heute nur Verfahren. die mit in-vivo Systemen arbeiten (Pilzsystemen), Hauptschwerpunkte von Optimierungsversuchen sind das sogenannte Biopulping und das Biobleaching.

Unter Biopulping versteht man die Behandlung von Holzhackschnitzeln mit lebenden Pilzsystemen.

Es gibt 2 Arten von Applikationsformen:
1) Vorbehandlung von Hackschnitzeln vor dem Refinern oder Mahlen zum Einsparen von Energie bei der Herstellung von Holzstoffen (z.B. TMP oder Holzschliff).
   Ein weiterer Vorteil ist die meist vorhandene Verbesserung der mechanischen Eigenschaften des Stoffes. ein Nachteil die schlechtere Endweiße.
2) Vorbehandlung von Hackschnitzeln (Softwood/Hardwood) vor der Zellstoffkochung (Kraftprozeß, Sulfitprozeß).
   Hier ist das Ziel die Reduzierung von Kochchemikalien, die Verbesserung der Kochkapazität und "extended cooking".
   Als Vorteile werden auch eine verbesserte Kappareduzierung nach dem Kochen im Vergleich zu einem Kochen ohne Vorbehandlung erreicht.

Nachteile dieser Verfahren sind eindeutig die langen Behandlungszeiten (mehrere Wochen) und v.a. die nicht gelöste Kontaminierungsgefahr während der Behandlung, wenn man auf die wohl unwirtschaftliche Sterilisation der Hackschnitzel verzichten will.

Das Biobleaching arbeitet ebenfalls mit in-vivo Systemen. Der gekochte Zellstoff (Softwood/Hardwood) wird vor der Bleiche mit Pilz beimpft und für Tage bis Wochen behandelt. Nur nach dieser langen Behandlungszeit zeigt sich eine signifikannte Kappazahlerniedrigung und Weißesteigerung, was den Prozeß unwirtschaftlich für eine Implementierung in den gängignen Bleichsequenzen macht.

Eine weitere meist mit immobilisierten Pilzsystemen durchgeführte Applikation ist die Behandlung von Zellstoffabrikationsabwässern, insbesondere Bleichereiabwässer zu deren Entfärbung und Reduzierung des AOX (Reduzierung von chlorierten Verbindungen im Abwasser, die Chlor- oder Chlordioxid-Bleichstufen verursachen).

Darüberhinaus ist bekannt, Hemicellulasen u.a. Xylanasen, Mannanasen als "Bleichbouster" einzusetzen.
Diese Enzyme sollen hauptsächlich gegen das nach dem Kochprozeß das Restlignin zum Teil überdeckende reprecipitierte Xylan wirken und durch dessen Abbau die Zugänglichkeit des Lignins für die in den nachfolgenden Bleichsequenzen angewendeten Bleichchemikalien (v.a. Chlordioxyd) erhöhen. Die im Labor nachgewiesenen Einsparungen von Bleichchemikalien wurden in gro Bem Maßstab nur bedingt bestätigt, sodaß man diesen Enzymtyp allenfalls als Bleichadditiv einstufen kann.

Ein weiterer, in letzter Zeit untersuchter möglicher Einsatz von lignolytischen Enzymen oder Pilzen wurde bei der "Kohleverflüssigung" erkennbar. Vorläufige Untersuchungen zeigen die prinzipielle Möglichkeit, Braun-oder-Steinkohle mit Hilfe von -in vivo- Behandlung von z.B. Weißfäulepilzen wie Phanerochaete chrysosporium anzugreifen und zu verflüssigen (Inkubationszeit mehere Wochen). (Bioengineering 4.92. 8 Jg.)

Die mögliche Struktur von Steinkohle zeigt ein dreidimensionales Netzwerk von polycyclischen aromatischen Ringsystemen mit einer "gewissen" Ähnlichkeit zu Ligninstrukturen.

Als Cofaktoren neben den lignolytischen Enzymen nimmt man Chelatsubstanzen (Siderophoren, wie Ammoniumoxalat) und Biotenside an.

In der Anmeldung WO-A-88/03190 wird ein System zur Entfernung von Lignin aus lignincellulosehaltigem Material unter gleichzeitiger Bleiche beschrieben, welches mit lignolytischen Enzymen aus Weißfäulepilzen unter Zusatz von Reduktions- und Oxidationsmitteln und phenolischen Verbindungen als Mediatoren arbeitet.

In der DE 4008893C2 werden zusätzlich zum Red/Ox-System "Mimic Substanzen", die das aktive Zentrum (prosthetische Gruppe) von lignolytischen Enzymen simulieren, zugesetzt. So konnte eine erhebliche Performanceverbesserung erzielt werden.

In der Anmeldung WO-A-92/20857 wird als zusätzliche Verbesserung eine Redoxkaskade mit Hilfe von im Oxidationspotential "abgestimmten" phenolischen oder nichtphenolischen Aromaten eingesetzt.

Bei allen drei Verfahren ist die Limitierung für einen großtechnischen Einsatz die Anwendbarkeit bei geringen Stoffdichten (bis maximal 4%) und bei den beiden letzten Anmeldungen die Gefahr des "Ausleachens" von Metallen beim Einsatz der Chelatverbindungen, die bei v.a. nachgeschalteten Peroxidbleichstufen zum Zerstören des Peroxids führen könnten.

Die vorliegende Erfindung hat sich nunmehr die Aufgabe gestellt, ein Verfahren zur Veränderung, Abbau oder Bleiche von Lignin, ligninhaltigem Material oder Kohle unter Einsatz von Oxidoreduktasen und geeigneten Oxidationsmitteln zur Verfügung zu stellen, das eine wesentlich bessere Effizienz als die bisher bekannten Verfahren aufweist.

Diese Aufgabe wird dadurch gelöst, daß die Oxidoreduktasen in Kombination mit aliphatischen , cycloaliphatischen, heterocyclischen oder aromatischen NO-, NOH- oder 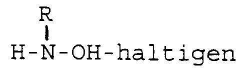 Verbindungen eingesetzt werden.
Erfindungsgemäß werden als aliphatische, cycloaliphatische, heterocyclische oder aromatische NO-, NOH- oder 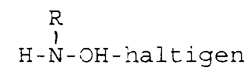 Verbindungen N-Hydroxy, Oxim; N-Oxid und N-Dioxid-Verbindungen, Hydroxylamin, Hydroxylamin-Derivate, Hydroxamsäuren oder Hydroxamsäurederivate in Ein- oder Mehrkomponentensystemen eingesetzt. Die genannten Verbindungen können in Kombination mit phenolischen Verbindungen und/oder nicht-phenolischen Verbindungen mit einem oder mehreren Benzolkernen und/oder Aromaten verwendet werden.

Zu den Oxidoreduktasen zählen insbesondere Oxidasen, Peroxidasen, Ligninperoxidasen, Manganperoxidasen und Laccasen.

Zum Einsatz kommen vorzugsweise solche Oxidoreduktasen, die aus Pilzen, Bakterien, Pflanzen und Tieren gewonnen worden sind. Ganz besonders bevorzugt werden erfindungsgemäß Oxidoreduktasen, die aus Weißfäulepilzen isoliert sind. Hierzu zählt vor allem Coriolus versicolor.

Demzufolge werden bei der Delignifizierung von Sulfat-, Sulfit-, Organozell-, OCC- Einjahresplanzenzellstoffen, Kohleverflüssigungen oder der Bleiche von Holzstoffen ganz besonders die Laccasen verwendet, die aus Weißfäulepilzen, insbesondere Coriolus versisolor gewonnen worden sind.

Grundsätzlich können sowohl natürlich vorkommende als auch gentechnisch veränderte Organismen Oxidoreduktaseproduzenten sein. Ebenso sind Teile von einzelligen oder mehrzelligen Organismen als Oxidoreduktaseproduzenten denkbar, vor allem Zellkulturen. Darüber hinaus kommen für die Zwecke der Erfindung z.B. modifizierte Oxidoreduktasen, Bestandteile und prostetische Gruppen von Oxidoreduktasen in Betracht.

Zusätzlich zu den genannten Enzymen können noch Hemicellulasen, Cellulasen, Pektinasen, Amylasen und Lipasen der Reaktionslösung zugegeben werden. Hier kann ebenfalls ein Gemisch von zwei oder mehr Enzymen als Katalysator dienen. Unter Umständen können hierbei Synergieeffekte bei der Entfernung des Lignins auftreten.

Dank des Einsatzes der oben genannten Enzyme in Kombination mit den erwähnten aliphatischen, cycloaliphatischen, heterocycli schen oder aromatischen NO-, NOH- oder NHOH-haltigen Verbindungen - im folgenden als Mediatoren bezeichnet - konnte beispielsweise bei der Bleiche von Sulfatzellstoffen das völlig überraschende Ergebnis einer Reduzierung der Kappazahl von 30 auf 10 innerhalb von 1 bis 4 Stunden selbst bei einer hohen Konsistenz im Bereich von 4 bis 20% erzielt werden.
In einer weiteren Variante der Erfindung können die genannten Stoffe in Kombination mit phenolischen Verbindungen oder nicht-phenolischen organischen Verbindungen mit einem oder mehreren Benzolkernen oder Aromaten verwendet werden.

Gleichzeitig können Reduktions- und Oxidationsmittel zur Einstellung eines bestimmten Red/Ox-Potentials zudosiert werden.

Als Reduktionsmittel können Natrium-Bisulfit, Natrium-Dithionit, Ascorbinsäure, Thiolverbindungen, Mercaptoverbindun gen oder Gluthation eingesetzt werden.

Als Oxidationsmittel können Luft, Sauerstoff, Ozon. H₂O₂ oaer organische Peroxide in Betracht kommen.

Die Reaktion läuft beispielsweise bei Laccase unter Sauerstoffzufuhr oder Sauerstoffüberdruck ab, bei den Peroxidasen (z.B. Ligninperoxidase, Manganperoxidase) mit Wasserstoffperoxid. Dabei können beispielsweise der Sauerstoff auch durch Wasserstoffperoxid + Katalase und Wasserstoffperoxid durch Glucose + GOD oder andere Systeme in situ generiert werden.

Außerdem können dem System Radikalbildner oder Radikalfänger (Abfangen von beispielsweise OH.⁻ - oder OOH.⁻ -Radikalen) zugesetzt werden. Diese können das Zusammenspiel innerhalb der Red/Ox- und Radikalmediatoren verbessern.

Der Reaktionslösung können auch Metallsalze zugegeben werden.

Diese sind im Zusammenwirken mit Chelatbildnern als Radikalbildner oder Red/Ox-Zentren wichtig. Die Salze bilden in der Reaktionslösung Kationen. Solche Ionen sind u.a. Fe²⁺ , Fe³⁺ Mn²⁺ ,Mn³⁺ ,Mn⁴⁺ ,Cu⁺ , Cu²⁺ ,Ti³⁺ , Cer⁴⁺ , Mg²⁺' Al³⁺ .
Die in der Lösung vorhanden Chelate können darüberhinaus als Mimicsubstanzen für die Enzyme, beispielsweise für die Laccasen, (Kupferkomplexe) oder für die Lignin- oder Manganperoxidasen (Hämkomplexe) dienen. Unter Mimicsubstanzen sind solche Stoffe zu verstehen, die die prosthetischen Gruppen von (hier) Oxidoreduktasen simulieren und z.B. Oxidationsreaktionen katalysieren können.

In einer weiteren Variante der Erfindung werden daher der Reaktionslösung auch Komplexbildner zugegeben. Als besonders wirksam hat sich hierbei der Einsatz der Komplexe bildenden Ethylendiamintetraessigsäure (EDTA) oder Diethylentriamin-pentaessigsäure (DTPA)erwiesen. Ebenso sind an dieser Stelle andere Eisen-, Mangan- oder Kupfer-Komplexoren zu nennen,z. B. Diethyla min, Hydroxylamin.

Weiterhin kann dem Reaktionsgemisch NaOCI zugesetzt werden. Diese Verbindung kann im Zusammenspiel mit Wasserstoffperoxid Singulettsauerstoff bilden.

Schließlich ist es auch möglich, unter Einsatz von Detergentien zu arbeiten. Als solche kommen nicht-ionische, anionische, kationische und amphotere Tenside in Betracht. Die Detergentien können die Penetration der Enzyme und Mediatoren in die Faser verbessern.

Ebenso kann es für die Reaktion förderlich sein. Polysaccharide und / oder Proteine zuzusetzen. Hier sind insbesondere als Polysaccharide Glucane, Mannane, Dextrane, Lävane, Pektine, Algi nate oder Pflanzengummis und/oder eigene von den Pilzen ge bildete oder in der Mischkultur mit Hefen produzierte Polysaccharide und als Proteine Gelantine und Albumin zu nennen.

Diese Stoffe dienen hauptsächlich als Schutzkolloide für die Enzyme.

Weitere Proteine, die zugesetzt werden können, sind Proteasen wie Pepsin, Bromelin, Papain usw.. Diese können u.a. dazu dienen, durch den Abbau des im Holz vorhandenen Extensins (hydroxyprolinreiches Protein) einen besseren Zugang zum Lignin zu erreichen.

Als weitere Schutzkolloide kommen Aminosäuren, Einfachzucker, Oligomerzucker, Aminosäuren, PEG-Typen der verschiedensten Molekulargewichte,Polyethylenoxide,Polyethylenimine und Polydi methylsiloxane in Frage.

Das erfindungsgemäße Verfahren arbeitet im Temperaturbereich zwischen 25 und 80°C , vorzugsweise bei 40 bis 60°C. In Gegenwart von Sauerstoff oder Luft wird bei Normaldruck bis zu 10 bar Überdruck gearbeitet. Der Konsistenzbereich der Reaktionslösung liegt bei 0,5 bis 40%.

Das erfindungsgemäße Verfahren kann nicht nur bei der Delignifizierung (Bleiche) von Sulfat-, Sulfit-, Organosolv- o.a.Zellstoffen und von Holzstoffen eingesetzt werden, sondern auch bei der Herstellung von Zellstoffen allgemein, sei es aus Holz oder Einjahrespflanzen, wenn eine Defibrillierung durch die üblichen Kochverfahren (verbunden eventuell mit mechanischen Ver-fahren oder Druck), d.h. eine sehr schonende Kochung bis zu Kappazahlen, die im Bereich von ca. 50-120 Kappa liegen können, gewährleistet ist.

Bei der Bleiche von Zellstoffen wie auch bei der Herstellung von Zellstoffen kann die Behandlung mehrfach wiederholt werden, entweder nach Wäsche und Extraktion des behandelten Stoffes mit NaOH oder ohne diese Zwischenschritte. Dies führt zu noch wesentlich weiter reduzierteren Kappawerten und zu erheblichen Weißesteigerungen. Ebenso kann vor der Enzym/Mediatorbehandlung eine O₂ Stufe eingesetzt werden oder auch eine saure Wäsche oder Q-Stufe (Chelatstufe) ausgeführt werden.

Bei der "Verflüssigung" von Kohle (Steinkohle, Braunkohle) wird eine ähnliche Verfahrensführung wie bei der Delignifizierung (Bleiche) von Holz oder Einjahrespflanzenzellstoff eingesetzt.

Im folgenden wird die Erfindung anhand von Beispielen näher erläutert:

### Beispiel 1

### Beispiel: Enzymatische Bleiche und Sulfatzellstoff.

30 g atro Zellstoff (Softwood), Stoffdichte 30% (- 100 g feucht) werden zu folgenden Lösungen gegeben:
1) 120 ml Leitungswasser werden mit 600 mg Mediatorverbindungen 1-10 jeweils in getrennten Ansätzen unter Rühren versetzt, der pH Wert mit 0,5 m H₂SO₄ so eingestellt, daß nach Zugabe des Zellstoffes und des Enzyms pH 4,5 resultiert. Dazu werden 20 IU (IU=Umsatz von 1µM Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1 - 10 bar Überdruck für 1-4 Stunden inkubiert.

Danach wird der Stoff über Nylonsieb (30µm) gewaschen und 1 Std. bei 60°C, 8% Stoffdichte und 2% NaOH pro g Stoff extrahiert.

Nach erneuter Wäsche des Stoffes wird die Kappazahl bestimmt.

Die Ergebnisse sind in Tabelle 1 wiedergegeben.

**Tabelle 1**

| Mediator | Kappa (Zellstoff) vor Behandlung | Kappa (Zellstoff) nach Behandlung |
|---|---|---|
| 1 | 28,7 | 22 |
| | | |
| 2 | 28,7 | 19,2 |
| | | |
| 3 | 28,7 | 22,3 |
| | | |
| 4 | 28,7 | 21,8 |
| | | |
| 5 | 28,7 | 21,4 |
| | | |
| 6 | 28,7 | 22 |
| | | |
| 7 | 28,7 | 19,9 |
| | | |
| 8 | 28,7 | 21,5 |
| | | |
| 9 | 28,7 | 10 |
| | | |
| 10 | 28,7 | 21,7 |
| Verbindungen 1 N,N-Dibenzylhydroxylamin 2 Hydroxybenzimidazol 3 Hydroxypiperidin 4 Chinolinoxid 5 Isochinolinoxid 6 Hydroxypyrolidin 7 Hydroxyhexahydroazepin 8 β-(N-Oxy 1,2,3,4 Tetrahydro)isochinolinoperpionsäure 9 Hydroxybenzotriazol 10 2,6 Dimethyl 2,6 Dihydroxyl aminoheptan 4-on -Oxalat | | |

### Beispiel 2

### Beispiel: Enzymatische Bleiche und Sulfatzellstoff.

30 g atro Zellstoff (Softwood O₂ delignifiziert), Stoffdichte 30% (-100 g feucht) werden zu folgenden Lösungen gegeben:
1) 120 ml Leitungswasser werden mit 300 mg Hydroxybenzotriazol unter Rühren versetzt, der pH Wert mit 0.5 m H₂ SO₄ so eingestellt, daß nach Zugabe des Zellstoffes und des Enzymes pH 4,5 resultiert. Dazu werden 1 bzw. 10 IU (IU=Umsatz von 1 µM Syringaldazin/min/ml Enzym) Laccase von Coriolus versicolor pro g Stoff gegeben. 1000 IU Ligninperoxidase/g Stoff. 1000 IU Peroxidase (Meerrettich)/g Stoff, 1000 IU Tyrosinase/g Stoff jeweils in getrennten Ansätzen. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen und 1 Std. bei 60°C, 8% Stoffdichte und 2% NaOH pro g Stoff extrahiert.

Nach erneuter Wäsche des Stoffes wird die Kappazahl bestimmt. (vgl. Tabelle 2)

**Tabelle 2**

| Enzyme | Kappa (Zellstoff) vor Behandlung | Kappa (Zellstoff) nach Behandlung |
|---|---|---|
| Ligninperoxidase | 15,2 | 11,3 |
| | | |
| Peroxidase (Meerrettich) 19036 Serva | 15,2 | 11,75 |
| | | |
| Thyrosinase T-7755 Sigma | 15,2 | 11,35 |
| | | |
| Laccase 10 IU | 15,2 | 5,5 |
| | | |
| Laccase 1 IU | 15,2 | 10,0 |

### Bespiel 3

### Beispiel: Enzymatische Bleiche und Sulfatzellstoff.

30 g atro Zellstoff (Softwood/Hardwood), Stoffdichte 30% (-100 g feucht) werden zu folgenden Lösungen gegeben:
1) 120 ml Leitungswasser werden mit 300 mg Hydroxybenzotriazol unter Rühren versetzt, der pH Wert mit 0.5 m H₂ SO₄ so eingestellt, daß nach Zugabe des Zellstoffes und des Enzyme pH 4,5 resultiert. Dazu werden 20 IU (IU=Umsatz) von 1 m Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen und 1 Std. bei 60°C, 8% Stoffdichte und 2% NaOH pro g Stoff extrahiert.

Nach erneuter Wäsche des Stoffes wird die Kappazahl bestimmt.

Es wurde eine Kappazahlreduzierung von 15 bis 16 Hardwood und von 30 bis 15 bei Softwood erzielt.

### Beispiel 4

### Beispiel: Enzymatische Bleiche von Strohzellstoff.

30 g atro Strohzellstoff, Stoffdichte 30% (-100 g feucht) werden zu folgenden Lösungen gegeben:
1) 120 ml Leitungswasser werden mit 300 mg Hydroxybenzotriazol unter Rühren versetzt, der pH Wert mit 0.5 m H₂ SO₄ so eingestellt, daß nach Zugabe des Zellstoffes und des Enzyme pH 4,5 resultiert. Dazu werden 20 IU (IU=Umsatz) von 1 µM Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen und 1 Std. bei 60°C, 8% Stoffdichte und 2% NaOH pro g Stoff extrahiert.

Nach erneuter Wäsche des Stoffes wird die Kappazahl bestimmt.

Es wurde eine Kappazahlreduzierung von 65 auf 14 erreicht.

### Beispiel 5

### Beispiel: Enzymatische Bleiche und Sulfitzellstoff.

30 g atro Zellstoff (Sulfitzellstoff), Stoffdichte 30% (-100 g feucht) werden zu folgenden Lösungen gegeben:
1) 120 ml Leitungswasser werden mit 300 mg Hydroxybenzotriazol unter Rühren versetzt, der pH Wert mit 0.5 m H₂ SO₄ so eingestellt, daß nach Zugabe des Zellstoffes und des Enzymes pH 4,5 resultiert. Dazu werden 20 IU (IU=Umsatz von 1 µM Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen und 1 Std. bei 60°C, 8% Stoffdichte und 2% NaOH pro g Stoff extrahiert.

Nach erneuter Wäsche des Stoffes wird die Kappazahl bestimmt.

Es wurde eine Kappazahlreduzierung von 15,5 auf 5,2 erreicht.

### Beispiel 6:

Enzymatische Bleiche von Sulfatzellstoff (Softwood/O₂ delignifiziert/Hardwood (2fache Behandlung)

30 g atro Zellstoff (Hardwood oder Softwood), Stoffdichte 30% (-100 g oder feucht) werden zu folgenden Lösungen gegeben:
1) 120 ml Leitungswasser werden mit 300 mg Hydroxybenzotriazol unter Rühren versetzt, der pH Wert mit 0,5 m H₂ SO₄ so eingestellt, daß nach Zugabe des Zellstoffes und des Enzyme pH 4,5 resultiert. Dazu werden 20 IU (IU=Umsatz) von 1 µM Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen und 1 Std. bei 60°C, 8% Stoffdichte und 2% NaOH pro g Stoff extrahiert.
a) Direkt nach der Inkubation wird ohne Waschschritt Enzym + Mediator zugegeben, gemixt (2 min) und die Reaktion erneut durchgeführt (gleiche Zudosierung wie in der ersten Behandlung).
b) Direkt nach der Inkubation wird nach dem Waschschritt und dem Auspressen des Stoffes auf 30% Stoffdichte die Reaktion durch Zuführen aller Komponenten nochmal durchgeführt.
c) Nach erneuter Wäsche des Stoffes, nach Extraktion und Abpressen des Stoffes auf 30% Stoffdichte wird die Reaktion durch Zuführen aller Komponenten nochmals durchgeführt.

| Hardwood: Kappazahlsenkung | Softwood: Kappazahlsenkung |
|---|---|
| a) 15 auf 5 | a) 15,5 auf 4,2 |
| b) 15 auf 3,5 | b) 15,5 auf 3 |
| c) 15 auf 2,5 | c) 15,2 auf 2,2 |

### Beispiel 7

### Beispiel: Enzymatische Bleiche von Holzschliff

30 g atro Holzstoff (Fichte). Stoffdichte 30% (-100 g feucht) werden zu folgenden Lösungen gegeben:
1) 120 ml Leitungswasser werden mit 300 mg N-Hydroxyhexahydroacepin unter Rühren versetzt, der pH Wert mit 0.5 m H₂ SO₄ so eingestellt, daß nach Zugabe des Zellstoffes und des Enzyme pH 4,5 resultiert. Dazu werden 1 IU (IU=Umsatz von 1 µM Syringaldazin/min/ml Enzym) Laccase von Coriolus versicolor pro g Stoff gegeben. Die Lösung wird auf 200 ml aufgefüllt und der Stoff zugegeben. Es wird für 2 min mit einem Teigkneter gemixt.

Danach wird der Stoff in eine auf 45 °C vorgeheizte Reaktionsbombe gegeben und unter 1-10 bar Überdruck für 1-4 Stunden inkubiert.

Danach wird der Stoff über einem Nylonsieb (30µm) gewaschen.

Es Konnte eine Weißegradsteigerung von 7% ISO-Weiße erzielt werden.

### Beispiel 8

### Beispiel: Enzymatische "Verflüssigung" von Braunkohle

30 g atro gemahlene Braunkohle (-200-500u Partikelgröße) werden zu folgenden Lösungen gegeben:
1) 120 ml Leitungswasser werden mit 300 mg Hydroxybenzotriazol unter Rühren versetzt, der pH Wert mit 0.5 m H₂ SO₄ so eingestellt, daß nach Zugabe der gemahlenen Kohle und des Enzyme pH 4,5 resultiert. Dazu werden 20 IU (IU=Umsatz von 1 µM Syringaldazin/min/ml Enzym) Laccase von Coriolus versicolor pro g gegeben. Die Lösung wird auf 200 ml aufgefüllt und der die Braunkohlezugegeben. Es wird für 2 min gemixt.

Danach wird Lösung in eine auf 45°C vorgeheitze Reaktionsbombe gegeben und unter 1-10 bar Überdruck für 1-4 Stunden inkubiert. Der verflüssigte Kohlenstoff wird der Bombe entnommen.

## Patentansprüche

1. Verfahren zur Veränderung, Abbau oder Bleiche von Lignin, ligninhaltigem Material oder Kohle, unter Einsatz von Oxidoreduktasen und geeigneten Oxidationsmitteln, dadurch gekennzeichnet, daß diese Oxidoreduktasen in Kombination mit aliphatischen, cycloaliphatischen, heterocyclischen oder aromatischen NO-, NOH- oder 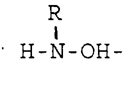 haltigen Verbindungen eingesetzt werden.

2. Verfahren nach Anspruch 1, dadurch gekennzeichnet, daß als Oxidreduktasen, Oxydasen, Peroxydasen, Ligninperoxidasen, Manganperoxidan oder Laccasen eingesetzt werden.

3. Verfahren nach Anspruch 1 oder 2, dadurch gekennzeichnet, daß aus Weißfäulepilzen, anderen Pilzen, Bakterien, Tieren oder Pflanzen stammende Oxidoreduktasen eingesetzt werden, die aus den natürlichen oder genetisch veränderten Organismen gewonnen werden.

4. Verfahren nach Anspruch 3, dadurch gekennzeichnet, daß aus Coriolus versicolor gewonnene Enzyme eingesetzt werden.

5. Verfahren nach Anspruch 1-4, dadurch gekennzeichnet, daß der Reaktionslösung Hemicellulasen, Cellulasen, Amylasen, Pektinasen oder Lipasen oder ein aus zwei oder mehreren dieser Enzyme bestehendes Gemisch zugesetzt werden.

6. Verfahren nach Anspruch 1-5, dadurch gekennzeichnet, daß modifizierte Enzyme, Enzymbestandteile, prosthetische Gruppen oder Mimicsubstanzen wie Hämgruppen und Hämgruppen enthaltende Verbindungen eingesetzt werden.

7. Verfahren nach einem der Ansprüche 1-6, dadurch gekennzeichnet, daß als NO-, NOH- oder 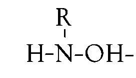 haltige aliphatische, cycloaliphatische,heterocyclische oder aromatische Verbindungen N-Hydroxy, Oxim-, N-Oxid und N-Dioxid-Verbindungen. Hydroxylamin. Hydroxylamin-Derivate, Hydroxamsäuren oder Hydroxamsäurederivate in Ein- oder Mehrkomponentensystemen eingesetzt werden.

8. Verfahren nach Anspruch 1-7, dadurch gekennzeichnet, daß zusätzlich zu diesen Stoffen phenolische Verbindungen und/oder nicht-phenolische Verbindungen mit einem oder mehreren Benzolkernen eingesetzt werden.

9. Verfahren nach Anspruch 1-8, dadurch gekennzeichnet. daß der pH-Wert zwischen 2 und 9 beträgt, vorzugsweise pH 4-6.

10. Verfahren nach Anspruch 1-9, dadurch gekennzeichnet, daß die Temperatur zwischen 25 und 80° C liegt, vorzugsweise 40-60°C.

11. Verfahren nach Anspruch 1-10, dadurch gekennzeichnet, daß der Reaktionslösung Reduktionsmittel zugesetzt werden.

12. Verfahren nach Anspruch 11, dadurch gekennzeichnet, daß als Reduktionsmittel Natrium-Bisulfit, Natrium-Dithionit, Ascorbinsäure, Thiolverbindungen, Mercaptoverbindungen oder Gluthation eingesetzt werden.

13. Verfahren nach Anspruch 1 -12
dadurch gekennzeichnet, daß als Oxidationsmittel Luft, Sauerstoff, Ozon, H₂O₂ oder organische Peroxide eingesetzt werden.

14. Verfahren nach Anspruch 1-13
dadurch gekennzeichnet, daß Luft oder O₂ bei Normaldruck oder 1 bis 10 bar Überdruck eingesetzt wird.

15. Verfahren nach Anspruch 1-14
dadurch gekennzeichnet, daß durch O₂ + Katalase oder H₂O₂ durch GOD + Glucose in situ generiert wird.

16. Verfahren nach Anspruch 1 -15
dadurch gekennzeichnet, daß der Reaktionslösung kationenbildende Metallsalze zugesetzt werden.

17. Verfahren nach Anspruch 16
dadurch gekennzeichnet, daß als Kationen Fe²⁺, Fe³⁺, Mn²⁺, Mn³⁺, Mn⁴⁺, Cu⁺, Cu²⁺, Ti³⁺, Cer⁴⁺, Mg²⁺, Al³⁺ eingesetzt werden.

18. Verfahren nach Anspruch 1 -17
dadurch gekennzeichnet, daß zusätzlich Komplexbildner der Reaktionslösung zugegeben werden.

19. Verfahren nach Anspruch 18
dadurch gekennzeichnet, daß als Komplexbildner Ethylendiamintetraessigsäure (EDTA) oder Diethylentriamin-penta-essigsäure (DTPA) oder andere Eisen-, Mangan- oder Kupfer-Komplexoren, z. B. Diethylamin, Hydroxylamin, eingesetzt werden.

20. Verfahren nach Anspruch 1 -19
dadurch gekennzeichnet, daß NaOCI eingesetzt wird.

21. Verfahren nach Anspruch 1 -19
dadurch gekennzeichnet, daß zusätzlich Detergentien eingesetzt werden.

22. Verfahren nach Anspruch 21
dadurch gekennzeichnet. daß als Detergentien nicht-ionische. ionische. anionische. kationische und amphotere Tenside zugesetzt werden.

23. Verfahren nach Anspruch 1 -22
dadurch gekennzeichnet, daß zusätzlich Polysaccaride und /oder Proteine der Reaktionslösung zugesetzt werden.

24. Verfahren nach Anspruch 23
dadurch gekennzeichnet, daß als Polysaccharide Glucane, Mannane, Dextrane, Lävane, Pektine, Alginate oder Pflanzengummis und/oder eigene von den Pilzen gebildete oder in der Mischkultur mit hefen produzierte Polysaccharide eingesetzt werden.

25. Verfahren nach Anspruch 23,
dadurch gekennzeichnet. daß als Proteine Gelantine und/oder Albumin eingesetzt werden.

26. Verfahren nach Anspruch 1 -25
dadurch gekennzeichnet, daß als Zusätze Einfachzucker, Oligomerzucker. Ammosäuren,Polyethylenglycole, Polyethylenoxide, Polyethylenimine und Polydimethylsiloxane eingesetzt werden.

27. Verfahren nach Anspruch 1 -26
dadurch gekennzeichnet, daß dem System Radikalbildner oder Radikalfänger zugesetzt werden.

28. Verfahren nach einem der Ansprüche 1 -27
dadurch gekennzeichnet, daß es zur Delignifizierung oder Bleiche von Zellstoffen zeitlich nach allen bekannten Kochverfahren eingesetzt wird.

29. Verfahren nach Anspruch 28,
dadurch gekennzeichnet, daß als Kochverfahren Sulfat-, Sulfit-, Organosolv- ASAM-Verfahren, Enabatch-Verfahren u.a. durchgeführt werden.

30. Verfahren nach Anspruch 28,
dadurch gekennzeichnet. daß es nach, zwischen oder vor allen üblichen Bleichstufen und anderen Sequenzen wie Q-Stufe, saurer Wäsche ect. durchgeführt wird.

31. Verfahren nach Anspruch 28-30
dadurch gekennzeichnet. daß das Verfahren in mehreren Stufen durchgeführt wird, wobei zwischen jeder Stufe eine Wäsche oder eine Wäsche und eine Extraktion mit Lauge oder weder Wäsche noch Extraktion stattfindet.

32. Verfahren nach Anpruch 1- 31, dadurch gekennzeichnet, daß im Konsistenzbereich von 0,5 - 40% gearbeitet wird.

33. Verwendung des Verfahrens nach Anspruch 1- 27 zur Kohleverflüssigung.

## Claims

1. Process for modifying, degrading or bleaching lignin, lignin-containing material or coal using oxidoreductases and suitable oxidizing agents, characterized in that these oxidoreductases are employed in combination with aliphatic, cycloaliphatic, heterocyclic or aromatic NO-, NOH- or 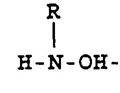 containing compounds.

2. Process according to Claim 1, characterized in that oxidases, peroxidases, lignin peroxidases, manganese peroxidases or laccases are employed as oxide reductases [sic].

3. Process according to Claim 1 or 2, characterized in that oxidoreductases are used which originate from white rot fungi, other fungi, bacteria, animals or plants and are obtained from the natural or genetically modified organisms.

4. Process according to Claim 3, characterized in that enzymes obtained from Coriolus versicolor are employed.

5. Process according to Claim 1-4, characterized in that a hemicellulase, cellulase, amylase, pectinase or lipase or a mixture comprising two or more of these enzymes is added to the reaction solution.

6. Process according to Claim 1-5, characterized in that a modified enzyme, enzyme constituent, prosthetic group or mimic substance, such as haemo group or a compound containing haemo groups, is employed.

7. Process according to any one of Claims 1-6, characterized in that the NO-, NOH- or 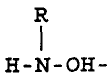 containing aliphatic, cycloaliphatic, heterocyclic or aromatic compounds employed are N-hydroxy, oxime, N-oxide and N-dioxide compounds, hydroxylamine, hydroxylamine derivatives, hydroxamic acids or hydroxamic acid derivatives in single- or multi-component systems.

8. Process according to Claim 1-7, characterized in that, in addition to these substances, phenolic compounds and/or non-phenolic compounds with one or more benzene rings are employed.

9. Process according to Claim 1-8, characterized in that the pH is between 2 and 9, preferably pH 4-6.

10. Process according to Claim 1-9, characterized in that the temperature is between 25 and 80°C, preferably 40-60°C.

11. Process according to Claim 1-10, characterized in that a reducing agent is added to the reaction solution.

12. Process according to Claim 11, characterized in that sodium bisulphite, sodium dithionite, ascorbic acid, a thiol compound, a mercapto compound or gluthatione [sic] is employed as the reducing agent.

13. Process according to Claim 1-12, characterized in that the oxidizing agents employed are air, oxygen, ozone, H2 O2 [sic] or organic peroxides.

14. Process according to Claim 1-13, characterized in that air or O2 [sic] is employed at atmospheric pressure or from 1 to 10 bar increased pressure.

15. Process according to Claim 1-14, characterized in that O2 [sic] is generated in situ by H2O2 [sic] + catalase or H2O2 [sic] is generated in situ by GOD + glucose.

16. Process according to Claim 1-15, characterized in that a cation-forming metal salt is added to the reduction solution.

17. Process according to Claim 16, characterized in that Fe2+, Fe3+, Mn2+, Mn3+, Mn4+, Cu+, Cu2+, Ti3+, Ce4+, Mg2+ or Al3+ [sic] are employed as cations.

18. Process according to Claim 1-17, characterized in that a complexing agent is additionally added to the reaction solution.

19. Process according to Claim 18, characterized in that ethylenediaminetetraacetic acid (EDTA) or diethylenetriaminepentaacetic acid (DTPA) or another iron-, manganese- or copper-complexing agent, for example diethylamine or hydroxylamine, is employed as the complexing agent.

20. Process according to Claim 1-19, characterized in that NaOCl is employed.

21. Process according to Claim 1-19, characterized in that a detergent is additionally employed.

22. Process according to Claim 21, characterized in that a nonionic, ionic, anionic, cationic or amphoteric surfactant is added as the detergent.

23. Process according to Claim 1-22, characterized in that a polysaccharide and/or protein is additionally added to the reaction solution.

24. Process according to Claim 23, characterized in that a glucan, mannan, dextran, levan, pectin, alginate or plant gum and/or an intrinsic polysaccharide formed by the fungi or a polysaccharide produced in the mixed culture with yeasts is employed as the polysaccharide.

25. Process according to Claim 23, characterized in that a gelatin and/or albumin is employed as the protein.

26. Process according to Claim 1-25, characterized in that a simple sugar, oligomeric sugar, amino acid, polyethylene glycol, polyethylene oxide, polyethyleneimine or polydimethylsiloxane is employed as an additive.

27. Process according to Claim 1-26, characterized in that an agent which forms free radicals or an agent which traps free radicals is added to the system.

28. Process according to any one of Claims 1-27, characterized in that it is employed for delignification or bleaching of pulp after all the known cooking processes.

29. Process according to Claim 28, characterized in that the sulphate, sulphite, organosolv [sic] or ASAM process or Enabatch process and the like is carried out as the cooking process.

30. Process according to Claim 28, characterized in that it is carried out after, between or before all customary bleaching stages and other sequences, such as the Q stage, acid washing and the like.

31. Process according to Claim 28-30, characterized in that the process is carried out in several stages, a washing or a washing and an extraction with alkali or neither washing nor extraction taking place between each stage.

32. Process according to Claim 1-31, characterized in that it is operated in the consistency range from 0.5 - 40%.

33. Use of the process according to Claim 1-27 for liquefaction of coal.

## Revendications

1. Procédé de modification, de dégradation ou de blanchiment de la lignine, de matériaux contenant de la lignine ou de charbon, utilisant des oxydoréductases et des agents oxydants appropriés, caractérisé en ce que ces oxydoréductases sont utilisées en combinaison avec des composés aliphatiques, cycloaliphatiques, hétérocycliques ou aromatiques contenant des groupements NO-, NOH- ou

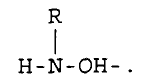

2. Procédé selon la revendication 1, caractérisé en ce qu'on utilise, comme oxydoréductases, des oxydases, des peroxydases, des lignine-peroxydases, des manganoperoxydases ou des laccases.

3. Procédé selon la revendication 1 ou 2, caractérisé en ce qu'on utilise des oxydoréductases dérivées de champignons alvéolaires, d'autres champignons, de bactéries, d'animaux ou de plantes, lesdites oxydoréductases étant obtenues à partir des organismes naturels ou génétiquement modifiés.

4. Procédé selon la revendication 3, caractérisé en ce qu'on utilise des enzymes obtenus à partir de Coriolus versicolor.

5. Procédé selon les revendications 1-4, caractérisé en ce qu'à la solution réactionelle, on ajoute des hémicellulases, des cellulases, des amylases, des pectinases, des lipases, ou un mélange de deux ou plus de ces enzymes.

6. Procédé selon les revendications 1-5, caractérisé en ce qu'on utilise des enzymes modifiés, des constituants d'enzymes, des groupes prostétiques ou de substances mimétiques telles que des hèmes ou des composés comprenant des hèmes.

7. Procédé selon l'une quelconque des revendications 1-6, caractérisé en ce que, comme composés aliphatiques, cycloaliphatiques, hétérocycliques ou aromatiques contenant des groupements NO-, NOH- ou 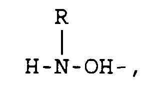 on utilise des composés N-hydroxy, oxime, N-oxide et N-dioxyde, de l'hydroxylamine, des dérivés de l'hydroxylamine, des acides hydroxamiques ou des dérivés d'acides hydroxamiques, dans des systèmes à un ou plusieurs composants.

8. Procédé selon les revendications 1-7, caractérisé en ce qu'outre ces matières, on utilise des composés phénoliques et/ou des composés non-phénoliques comprenant un ou plusieurs noyaux benzéniques.

9. Procédé selon les revendications 1-8, caractérisé en ce que le pH est compris entre 2 et 9, de préférence 4-6.

10. Procédé selon les revendications 1-9, caractérisé en ce que la température est comprise entre 25 et 80°C, de préférence 40-60°C.

11. Procédé selon les revendications 1-10, caractérisé en ce qu'un agent réducteur est ajouté à la solution réactionelle.

12. Procédé selon la revendication 11, caractérisé en ce qu'on utilise, comme agent réducteur, du bisulfite de sodium, du dithionite de sodium, de l'acide ascorbique, des composés thiols, des composés mercaptans ou de la gluthatione.

13. Procédé selon les revendications 1-12, caractérisé en ce qu'on utilise comme agent oxydant de l'air, de l'oxygène, de l'ozone, de l'H₂O₂ ou des peroxydes organiques.

14. Procédé selon les revendications 1-13, caractérisé en ce que de l'air ou de l'O₂ est utilisé sous une pression normale ou sous une surpression de 1 à 10 bars.

15. Procédé selon les revendications 1-14, caractérisé en ce que de l'O₂ est généré in situ par H₂O₂ + catalase ou H₂O₂ par GOD + glucose.

16. Procédé selon les revendications 1-15, caractérisé en ce qu'on ajoute à la solution réactionnelle des sels métalliques générateurs de cations.

17. Procédé selon la revendication 16, caractérisé en ce qu'on utilise comme cations Fe2+, Fe3+, Mn2+, Mn3+, Mn4+, Cu+, Cu2+, Ti3+, Cer4+, Mg2+ ou Al3+.

18. Procédé selon les revendications 1-17, caractérisé en ce qu'on ajoute en outre à la solution réactionelle des générateurs de complexes.

19. Procédé selon la revendication 18, caractérisé en ce qu'on utilise comme générateur de complexes de l'acide éthylène-diamine-tétracétique (EDTA), de l'acide diéthylène-triamine-pentacétique (DTPA) ou d'autres agents complexants à base de fer, de manganèse ou de cuivre, par ex. diéthylamine ou hydroxylamine.

20. Procédé selon les revendications 1-19, caractérisé en ce qu'on utilise du NaOCl.

21. Procédé selon les revendications 1-19, caractérisé en ce qu'on utilise des détergents supplémentaires.

22. Procédé selon la revendication 21, caractérisé en ce qu'on utilise comme détergents des tensides non-ioniques, ioniques, anioniques, cationiques et amphotères.

23. Procédé selon les revendications 1-22, caractérisé en ce que des polysaccharides et/ou protéines supplémentaires sont ajoutés à la solution réactionnelle.

24. Procédé selon la revendication 23, caractérisé en ce qu'on utilise comme polysaccharide de la glucane, de la mannane, de la dextrane, de la lévane, de la pectine, de l'alginate ou des gommes végétales et/ou des polysaccharides formés par les champignons ou produits au moyen de levures en culture mixte.

25. Procédé selon la revendication 23, caractérisé en ce qu'on utilise comme protéine de la gélatine et/ou de l'albumine.

26. Procédé selon les revendications 1-25, caractérisé en ce qu'on utilise comme additifs des sucres simples, des sucres oligomériques, des acides aminés, des polyéthylèneglycols, des polyéthylène-oxydes, des polyéthylène-imines et des polydiméthylsiloxanes.

27. Procédé selon les revendications 1-26, caractérisé en ce qu'on ajoute au système des générateurs de radicaux ou des capteurs de radicaux.

28. Procédé selon l'une quelconque des revendications 1-27, caractérisé en ce qu'on l'utilise pour la délignification ou le blanchiment de pâtes à papier, après tous les procédés de cuisson connus.

29. Procédé selon la revendication 28, caractérisé en ce que l'on exécute, en tant que procédé de cuisson, notamment les procédés au sulfate, au sulfite, à l'organosolv, à l'ASAM et à l'enabatch.

30. Procédé selon la revendication 28, caractérisé en ce qu'il est exécuté après, entre ou avant toutes les étapes usuelles de blanchiment et autres séquences telles qu'une étape Q, un lavage acide, etc.

31. Procédé selon les revendications 28-30, caractérisé en ce que le procédé est exécuté en plusieurs étapes, un lavage, ou un lavage et une extraction alcaline, ou ni lavage ni extraction étant exécutés entre chaque étape.

32. Procédé selon les revendications 1-31, caractérisé en ce qu'on opère dans une plage de consistance de 0,5-40 %.

33. Utilisation du procédé selon les revendications 1-27 pour la liquéfaction du charbon.
